# EUROPÄISCHE PATENTSCHRIFT

(11) **EP 0 604 385 B1**
(45) Veröffentlichungstag und Bekanntmachung des Hinweises auf die Patenterteilung: **06.11.1996**
(21) Anmeldenummer: 93890238.4
(22) Anmeldetag: 10.12.1993
(51) Int. Cl.: F16K 15/08

(54) **Selbsttätiges Ventil**
Automatic valve
Soupape automatique

(30) Priorität: 23.12.1992 AT 2562/92
(43) Veröffentlichungstag der Anmeldung: 29.06.1994
(73) Patentinhaber: HOERBIGER VENTILWERKE AKTIENGESELLSCHAFT, A-1110 Wien (AT)
(72) Erfinder: Fink, Günter, Ing., D-86956 Schongau (DE); Schröcker, Helmut, Dipl.-Ing., D-86986 Schwabbruck (DE)
(74) Vertreter: Klein, Adam, Dipl.Ing.

(56) Entgegenhaltungen:
- EP-A- 0 180 681
- EP-A- 0 325 089
- DE-A- 3 507 831
- GB-A- L18 478
- GB-A- 833 755
- US-A- 4 402 342

## Beschreibung

Die Erfindung bezieht sich auf ein selbsttätiges Ventil, insbesondere Kompressorventil oder Rückschlagventil, mit einem Ventilsitz, der Durchgangskanäle für das gesteuerte Medium aufweist, über denen eine Verschlußlamelle beweglich angeordnet ist, die aus einem Verschlußteil mit konzentrischen, durch radiale Stege miteinander verbundenen Ringen besteht und durch flexible Lenker geführt ist, die mit einem Ende am Außenrand des Verschlußteils angreifen und mit ihrem anderen Ende außerhalb des Verschlußteils relativ zum Ventilsitz fixiert sind.

Ventile dieser Bauart sind bekannt. Sie bestehen in aller Regel aus einem Ventilsitz, einem davon im Abstand angeordneten Fänger und aus zwischen dem Ventilsitz und dem Fänger angeordneten beweglichen Ventilteilen, insbesondere einer Verschlußplatte oder Verschlußlamelle. Außer den Ventilen mit entlang einer Führungsfläche gleitend geführten Verschlußstücken sind Ventile mit Verschlußlamellen bekannt, die bei ihrer Hubbewegung durch flexible Lenker reibungsfrei geführt sind. Die flexiblen Lenker können dabei entweder konzentrisch innerhalb der Verschlußringe angeordnet sein und innen am Verschlußteil der Verschlußlamelle angreifen oder aber vom Außenrand des Verschlußteils ausgehen. Ihre dem Verschlußteil abgewendeten Enden sind relativ zum Ventilsitz und zum Fänger fixiert; sie können z. B. zwischen dem Ventilsitz und dem Fänger eingespannt sein.

Eine Ventilausführung dieser Art ist aus der GB-PS 18 478 A.D. 1911 bekannt. Der Verschlußteil ist dort eine Platte, deren konzentrische Ringe durch in Umfangsrichtung gegeneinander versetzte Stege miteinander verbunden sind. Die Platte ist durch den flexibel ausgebildeten äußersten Plattenring reibungsfrei geführt, der gegen den Fänger aufgebogen ist und mit seinem Außenrand an diesem anliegt. Dieser elastische Führungsring ist ungleich breit ausgeführt. Er ist im Bereich der an den äußersten Plattenring ansetzenden Stege verbreitert, im Abstand davon hingegen schmäler ausgeführt, um seine Flexibilität zu vergrößern. Es kann daher zu Plattenbrüchen im Bereich der schmalen Ringabschnitte und auch im Bereich der mit verhältnismäßig kleinem Radius ausgeführten Krümmungen im Bereich der Stege kommen.

Bei offenem Ventil liegen die Ringe der Verschlußplatte in einer Ebene am Fänger an, auf den sie verhältnismäßig hart aufschlagen. Das gesteuerte Medium trifft dabei vom Ventilsitz kommend praktisch senkrecht auf die Verschlußringe auf und wird zweimal rechtwinkelig umgelenkt, bevor es die Durchgangsschlitze des Fängers verläßt. Der Durchgangsquerschnitt des Ventils ist dabei auch von der Größe der Schlitze in der Verschlußplatte abhängig. Insgesamt entstehen auf Grund der herrschenden Strömungsverhältnisse Wirbelbildungen und Rückstauerscheinungen, die zusätzlich zum begrenzten Durchgangsquerschnitt einen verhältnismäßig großen Durchgangswiderstand für das durch das Ventil strömende Medium verursachen können.

Aus der DE-A1-35 07 831 ist eine andere Ventilbauart bekannt, bei der das Verschlußstück aus einer federnden Zunge besteht. Diese federnde Zunge steuert die Durchgangsöffnung in der Ventilsitzplatte. Solche Ventilzungen werden aus einem Federstahlblatt geformt, das sich in aller Regel über die gesamte Oberfläche der Ventilsitzplatte erstreckt. Bei dieser Ausführung ist kein Fänger und auch kein anderer Endanschlag für die Ventilzunge vorgesehen. Diese ragt bei geöffnetem Ventil in der Ausführung als Saugventil frei in den Zylinderraum hinein. Der verhältnismäßig breite Dichtungsabschnitt liegt aber auch bei offenem Ventil im Strömungsweg des gesteuerten Mediums und verursacht so einen Rückstau, Wirbelbildungen und eine zweifache Umlenkung des Mediums. Der Durchgangswiderstand ist daher auch bei diesem bekannten Ventil verhälnismäßig hoch. Außerdem sind solche Ventile, die im Verhältnis zum Zylinderquerschnitt einen nur kleinen Durchgangsquerschnitt für das gesteuerte Medium freigeben, nur für kleine und billige Verdichter geeignet.

Der Erfindung liegt die Aufgabe zu Grunde, die bekannten Ventile der eingangs angeführten Bauart auf einfache Weise so zu verbessern, daß der Durchgangsquerschnitt für das gesteuerte Medium vergrößert sowie die Strömungsverhältnisse für das Medium verbessert werden, um den Durchgangswiderstand des Mediums durch das Ventil zu verringern.

Mit der Erfindung wird diese Aufgabe dadurch gelöst, daß die Lenker, die zunächst mit einem Außensteg radial einwärts gegen den Außenrand des Verschlußteils der Verschlußlamelle verlaufen, in je einem Bogen in wenigstens einen in Umfangsrichtung verlaufenden Ringabschnitt übergehen, der vor der Angriffsstelle am Verschlußteil zunächst mit einer Kröpfung auswärts und anschließend in einem Bogen radial einwärts mit einem Innensteg zum Außenrand des Verschlußteils geführt ist, dessen radiale Stege gegen die an dem Verschlußteil angreifenden Innenstege der Lenker und auch gegeneinander in Umfangsrichtung versetzt sind, wobei in Öffnungsrichtung des Ventils Raum zum freien Ausschwingen der Verschlußlamelle ohne Endanschlag vorgesehen ist. Diese Ausbildung der Verschlußlamelle ermöglicht in Verbindung mit dem Fehlen eines Endanschlags und durch den freien Raum zum Ausschwingen eine unbehinderte Verformung der Verschlußlamelle beim Öffnen des Ventils und eine elastische Anpassung an die jeweiligen Strömungsverhältnisse. Daraus ergibt sich trotz einfachem Aufbau des Ventils vergleichsweise eine Vergrößerung des Durchgangsquerschnitts und eine Verbesserung der Strömungsverhältnisse, wodurch der Durchgangswiderstand des Ventils für das gesteuerte Medium verringert wird. Außerdem ist das erfindungsgemäße Ventil in besonderem Maße für Trockenlauf geeignet.

Beim Öffnen des erfindungsgemäßen Ventils verformen sich nicht nur die Lenker sondern auch die einzelnen Ringabschnitte der Verschlußlamelle einschließlich des Verschlußteils, wodurch die Durchgangsschlitze zwischen den benachbarten konzentrischen Ringen praktisch rautenartig aufgespreizt werden. Der freie Durchgangsquerschnitt der Schlitze wird dadurch vergrößert. Außerdem bleiben die Ringabschnitte der Verschlußlamelle beim Aufbiegen derselben nicht parallel zur Dichtfläche des Ventilsitzes. Sie verformen sich vielmehr in eine geneigte Lage relativ zur Strömungsrichtung des Mediums, so daß dieses nicht mehr rechtwinkelig scharf umgelenkt wird, sondern den geneigten Ringflächen entlanggleitet und wenigstens teilweise abgelenkt wird, ohne daß es zu großen Rückstau- und Wirbelbildungen kommt. Von weiterem Vorteil ist, daß die einzelnen Durchgangsschlitze zwischen den konzentrischen Ringen der Verschlußlamelle bei offenem Ventil nicht in einer Ebene, sondern in parallelen Ebenen über- oder nebeneinander liegen. Das strömende Medium wird dadurch im Inneren des Ventils über einen größeren Raum verteilt, wobei ein unmittelbares Aufeinanderprallen von Mediumsströmen, bevor diese das Ventil durch die Schlitze verlassen, weitgehend vermieden wird. Der Durchgangswiderstand, der dem gesteuerten Medium beim Durchgang durch das erfindungsgemäße Ventil entgegengesetzt wird, ist deshalb im Verhältnis mit vergleichbaren bekannten Ausführungen erheblich verkleinert.

Beim erfindungsgemäßen Ventil kann es in Abhängigkeit vom verdichteten Medium und den Betriebsbedingungen des Verdichters vorkommen, daß die Lenker und auch die Verschlußlamelle selbst verhältnismäßig stark verformt werden. Es ist daher zweckmäßig, vor allem die Lenker entsprechend verstärkt auszubilden. Dies kann in weiterer Ausgestaltung der Erfindung dadurch erreicht werden, daß die Krümmungsdurchmesser der Bögen, mit denen die Ringabschnitte der Lenker in den Außensteg und in den Innensteg übergehen, größer als die mittlere Breite der Ringabschnitte der Lenker sind. Dadurch werden Brüche in den gefährdeten Krümmungsbereichen vermieden. Außerdem können die Ringabschnitte der Lenker über ihre ganze Länge, insbesondere auch im Bereich der an die Innen- und Außenstege anschließenden Bögen, wenigstens annähernd gleich breit sein.

Nach einem weiteren Merkmal der Erfindung wird eine auch hohen Beanspruchungen gewachsene Lenkerausbildung dadurch erreicht, daß an die Außenstege der Lenker je zwei Ringabschnitte anschließen, die in entgegengesetzten Umfangsrichtungen verlaufen und von denen jeder mit einem vom benachbarten Außensteg ausgehenden, ihm entgegen verlaufenden Ringabschnitt in einen gemeinsamen Innensteg übergehen. Der über den Durchgangskanälen des Ventilsitzes angeordnete Verschlußteil der Verschlußlamelle wird also von jeder Befestigungsstelle der Lenker ausgehend von zwei Lenkern gehalten und geführt, wobei nicht nur die einzelnen Lenker weniger belastet sind, sondern auch die Parallelführung der Verschlußlamelle während der Hubbewegung verbessert und eine Druckbewegung verhindert wird. Die Ringabschnitte aller vorgesehenen Lenker können bei dieser Ausbildung zu einem geschlossenen Ring verbunden sein, der zur Erzielung größerer Krümmungsradien im Bereich der Innenstege von der Kreisform auswärts abweicht. Die Ringabschnitte der Lenker können auch Durchgangskanäle des Ventilsitzes abdecken.

Eine einfache und dennoch hoch belastbare Ausführung des erfindungsgemäßen Ventils wird dadurch erreicht, daß die Lenker der Verschlußlamelle von zwei einander diametral gegenüberliegenden Außenstegen ausgehen und mit zwei einander diametral gegenüberliegenden Innenstegen enden, die gegen die Außenstege um 90° in Umfangsrichtung versetzt sind. Obwohl dabei nur zwei Stege vorgesehen sind, ist die Verschlußlamelle auch dann an zwei diametral gegenüberliegenden Stellen einwandfrei geführt, wenn von jedem Außensteg jeweils nur ein Innensteg ausgeht.

Die Erfindung bezieht sich auch auf einen Kompressor bestehend aus einem Kompressorzylinder mit Kolben, einem Zylinderkopf, einer Sitzplatte, einem Druckventil sowie einem erfindungsgemäßen Ventil, das als Saugventil ausgebildet ist, wobei die Außenstege der Lenker mit einem geschlossenen Einspannring verbunden sind, der zwischen der Stirnseite des Kompressorzylinders und dem Zylinderkopf eingespannt ist, wobei die Verschlußlamelle in den Kompressorzylinder frei ausschwingt, der Ventilsitz in der gleichfalls zwischen dem Kompressorzylinder und dem Zylinderkopf eingespannten Sitzplatte vorgesehen und die Durchgangskanäle für das Druckventil im Raum zwischen dem Einspannring und dem Verschlußteil der Verschlußlamelle angeordnet sind. Es handelt sich dabei um eine einfache Ausbildung des Saugventils, dessen Verschlußlamelle zusammen mit den Lenkern und dem Einspannring einen einheitlichen Maschinenteil bildet, der ohne besondere Vorkehrungen lediglich zwischen der Stirnseite des Kompressors und der Ventilsitzplatte oder dem Zylinderkopf eingespannt wird. Die Durchgangskanäle für das Druckventil sind dabei im Bereich der Schlitze vorgesehen, die zwischen den Lenkern und dem Einspannring oder den Lenkern und dem Verschlußteil liegen, so daß sie bei geschlossenem Saugventil nicht abgedeckt sind. Die Druckventile weisen eine an sich bekannte, dem jeweiligen Anwendungsfall angepaßte Ausbildung auf.

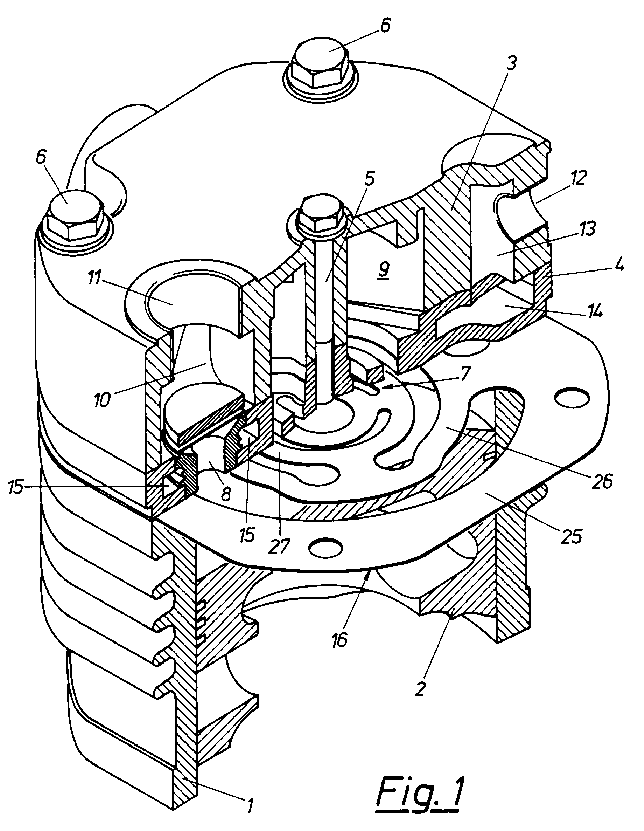

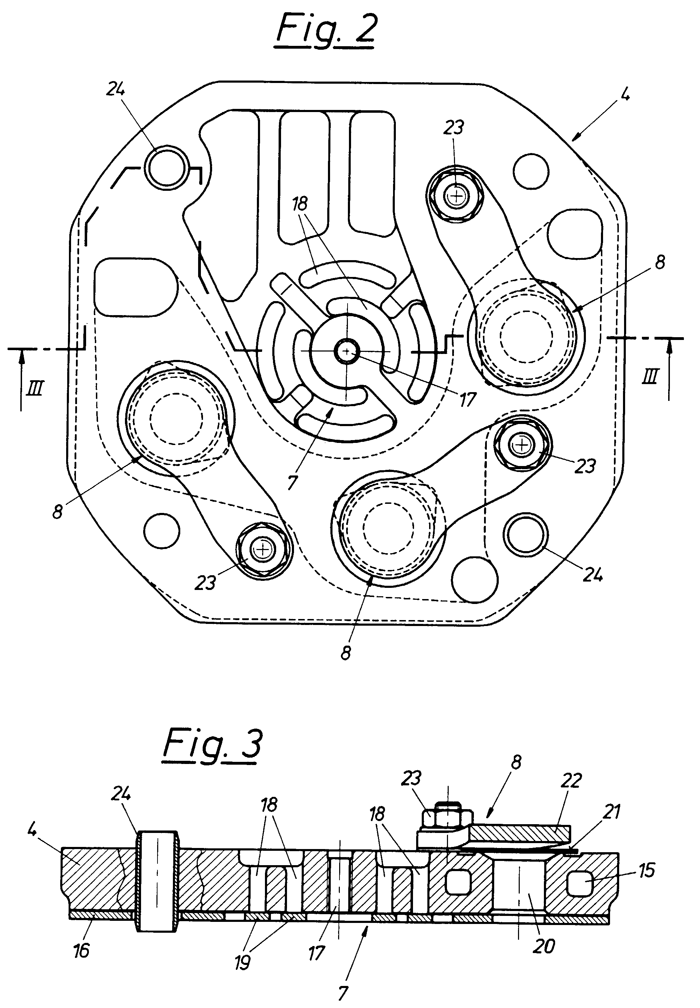

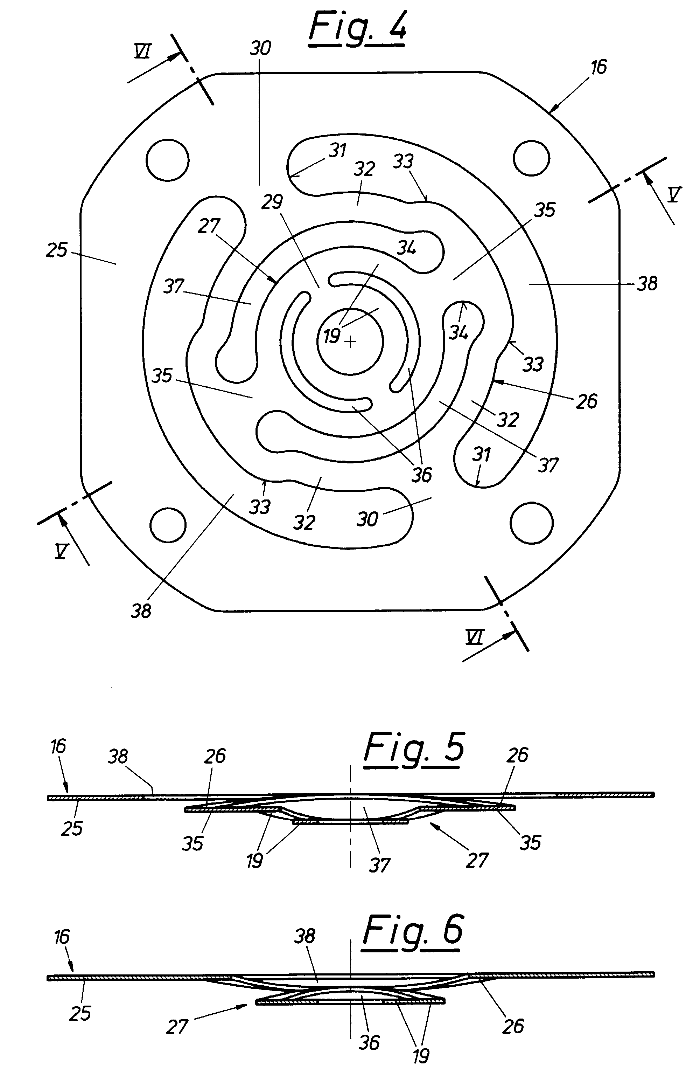

Weitere Einzelheiten und Vorteile der Erfindung ergeben sich aus der nachfolgenden Beschreibung eines Ausführungsbeispiels, das in den Zeichnungen dargestellt ist. In diesen zeigt Fig. 1 einen Teil eines Kompressors in perspektivischer Darstellung, der in axialer Richtung teilweise aufgeschnitten ist und in den ein aus Saugventil und Druckventil bestehender Ventilsatz mit einem erfindungsgemäßen Saugventil eingebaut ist. In Fig. 2 ist eine Draufsicht auf den Ventilsatz, in Fig. 3 ein Schnitt nach der Linie III-III durch den Ventilsatz nach Fig. 2 und in Fig. 4 eine Draufsicht auf die Verschlußlamelle des Saugventils dargestellt. Fig. 5 zeigt einen Querschnitt durch die Verschlußlamelle nach der Linie V-V in Fig. 4 und Fig. 6 einen Querschnitt nach der Linie VI-VI in Fig. 4, wobei in den Fig. 5 und 6 die Ringe der Verschlußlamelle und die Lenker so aufgebogen sind, wie dies bei geöffnetem Ventil der Fall ist, jedoch in einer überhöhten Darstellung, um die Verformungen der Verschlußlamelle besser zum Ausdruck zu bringen.

Der in Fig. 1 dargestellte Verdichter besteht aus einem Zylinder 1 mit einem Kolben 2 und einem Zylinderkopf 3. Zwischen dem Zylinder 1 und dem Zylinderkopf 3 ist ein Ventilsatz mit einer Sitzplatte 4 eingespannt, die außerdem durch eine Zugschraube 5 am Zylinderkopf 3 befestigt ist. Die Schrauben 6 sind die Befestigungsschrauben des Zylinderkopfes 3 am Zylinder 1 und durchsetzen auch die Sitzplatte 4.

Die Sitzplatte 4 weist ein zentral angeordnetes Saugventil 7 und ein dieses konzentrisch umgebendes, aus mehreren Einzelventilen bestehendes Druckventil 8 auf. Über dem Saugventil 7 befindet sich im Zylinderkopf 3 ein Saugraum 9, der mit einer nicht dargestellten Ansaugöffnung verbunden ist, und über dem Druckventil 8 ist ein Druckraum 10 vorgesehen, von dem ein mit Gewinde versehener Druckanschluß 11 nach außen geführt ist. Der Zylinderkopf 3 und die Sitzplatte 4 sind außerdem mit einer Wasserkühlung versehen. Ein mit Gewinde versehener Kühlwasseranschluß 12 im Zylinderkopf 3 führt zu einem Kühlwasserraum 13 im Zylinderkopf 3, der mit einem Kühlwasserraum 14 in der Sitzplatte 4 in Verbindung steht. Das Druckventil 8 ist von Kühlwasserkanälen 15 umgeben. Die nicht geschnittene Verschlußlamelle des Saugventils ist mit 16 bezeichnet.

In den Fig. 2 und 3 ist der Ventilsatz mit der Sitzplatte 4 dargestellt. In deren Achse befindet sich eine Gewindebohrung 17 für die Aufnahme der Zugschraube 5. Der Ventilsitz des zentral gelegenen Saugventils 7 ist mit auf zwei Teilkreisen angeordneten, konzentrischen Durchgangskanälen 18 versehen, die gemäß Fig. 3 durch Verschlußringe 19 der Verschlußlamelle 16 abgedeckt sind. Die drei vorgesehenen Druckventile 8 haben je einen Durchgangskanal 20, der durch eine Drucklamelle 21 gesteuert ist, über der sich ein Druckfänger 22 befindet. Mit einer Schraube 23 sind der Druckfänger 22 und die Drucklamelle 21 an der Sitzplatte 4 befestigt. Aus Fig. 3 ist ferner ein Rohrstutzen 24 zu erkennen, der die Sitzplatte 4 durchsetzt und zur Zentrierung der Verschlußlamelle 16 dient. Wie Fig. 2 entnommen werden kann, sind zwei diametral gegenüberliegende Rohrstutzen 24 vorgesehen, die auch von den Zylinderkopfschrauben 6 durchsetzt werden.

Die in Fig. 4 in Draufsicht dargestellte Verschlußlamelle 16 besteht aus einem Einspannring 25, an den einwärts verlaufende Lenker 26 anschließen, die zu einem im Zentrum der Lamelle vorgesehenen Verschlußteil 27 führen. Dieser besteht aus zwei konzentrischen Verschlußringen 19, die durch radiale Stege 29 miteinander verbunden sind. Die Lenker 26 verlaufen zunächst mit einem Außensteg 30 radial einwärts, der sich im Ausführungsbeispiel verzweigt und über je einen Bogen 31 in zwei Ringabschnitte 32 übergeht, die in einander entgegengesetzten Umfangsrichtungen verlaufen. Diese Ringabschnitte 32 sind in ihrem weiteren Verlauf zunächst mit einer Kröpfung 33 auswärts geführt und gehen dann mit einer einwärts gerichteten Krümmung 34 mit verhältnismäßig großem Krümmungsradius in einen Innensteg 35 über, der an den Verschlußteil 27 anschließt. Zwischen den Ringen 19 des Verschlußteils 27 sind Durchgangsschlitze 36 vorgesehen und zwischen den Lenkern 26 und dem Verschlußteil 27 sind Durchgangsschlitze 37 ausgespart, die im Ausführungsbeispiel breiter als die Durchgangsschlitze 36 sind. Weitere Durchgangsschlitze 38 befinden sich zwischen dem Einspannring 25 und den Lenkern 26 der Verschlußlamelle 16.

Aus Fig. 4 ist zu erkennen, daß die Krümmungsdurchmesser der Bögen 31 und 34, mit denen die Ringabschnitte 32 der Lenker 26 in den Außensteg 30 und in den Innensteg 35 übergehen, größer sind als die mittlere Breite der Ringabschnitte 32 der Lenker 26. Auch ist zu sehen, daß die Ringabschnitte 32 der Lenker 26 über ihre ganze Länge, insbesondere auch im Bereich der an die Innen- und Außenstege 35,30 anschließenden Bögen 34,31, wenigstens annähernd gleich breit sind. Beide Maßnahmen dienen dazu, die Bruchgefahr der Lenker auch bei größerer Ausbiegung aus der Ebene der Verschlußlamelle 16 weitgehend auszuschalten.

Die beiden Ringabschnitte 32, die von jedem Außensteg 30 in entgegengesetzten Umfangsrichtungen ausgehen, führen je zu einem anderen Innensteg 35, der gegenüber dem Außensteg 30 in Umfangsrichtung um 90° versetzt ist. In jedem Innensteg 35 vereinigen sich zwei in Umfangsrichtung gegeneinander verlaufende Ringabschnitte 32. Die Ringabschnitte 32 aller vorgesehenen Lenker 26 sind dadurch zu einem geschlossenen Ring verbunden, der im Bereich der Innenstege 35 durch die Kröpfungen 33 von der Kreisform auswärts abweicht. Beim Ausführungsbeispiel gehen die Lenker 26 der Verschlußlamelle 16 von zwei einander diametral gegenüberliegenden Außenstegen 30 aus und enden in zwei Innenstegen 35, die gleichfalls einander diametral gegenüberliegen und gegen die Außenstege um 90° in Umfangsrichtung versetzt sind. Der Einspannring 25 verbindet die beiden Außenstege 30 miteinander.

Aus Fig. 1 ist zu entnehmen, daß die Verschlußlamelle 16 nach Fig. 4 mit ihrem Einspannring 25 zwischen der Stirnseite des Zylinders 1 und der Sitzplatte 4 des Ventilsatzes eingespannt ist. Der Verschlußteil 27 der Verschlußlamelle 16 steuert dort das Saugventil 7. Die Verschlußlamelle 16 kann beim Öffnen des Saugventils 7 ohne Endanschlag in den freien Raum des Zylinders 1 ausschwingen. Die Fig. 5 und 6 zeigen in axialen Mittelschnitten, wie die Verschlußlamelle 16 bei geöffnetem Saugventil 7 verformt ist.

Aus Fig. 5 ist zu erkennen, daß im ausgeschwungenen Zustand nicht nur die Lenker 26 durchgebogen sind, sondern auch die Ringe 19 des Verschlußteils 27. Es ist aus Fig. 5 zu sehen, daß dabei die Durchgangsschlitze 37 rautenartig aufgespreizt sind, so daß ihr freier Durchgangsquerschnitt größer ist als bei in einer Ebene liegenden Verschlußteilen, wie dies in Fig. 4 gezeigt ist. Es ist auch zu erkennen, daß die Ringe 19 des Verschlußteils 27 nicht parallel zur Einspannebene der Verschlußlamelle 16 verlaufen, sondern schräg zur Strömungsrichtung des Mediums verformt sind. Das gleiche ist auch aus Fig. 6 zu sehen. Dort ist weiterhin zu erkennen, daß auch die Durchgangsschlitze 36 zwischen den beiden konzentrischen Ringen 19 des Verschlußteils 27 aufgespreizt sind und so einen größeren Durchgangsquerschnitt aufweisen. Insgesamt hat also das erfindungsgemäße Ventil einen größeren freien Durchgangsquerschnitt für das hindurchströmende Medium, bietet diesem bessere Strömungsbedingungen und zeichnet sich daher den vergleichbaren bekannten Ausführungen gegenüber durch einen erheblich verringerten Durchgangswiderstand aus.

## Patentansprüche

1. Selbsttätiges Ventil, insbesondere Kompressorventil oder Rückschlagventil, mit einem Ventilsitz, der Durchgangskanäle (18) für das gesteuerte Medium aufweist, über denen eine Verschlußlamelle (7) beweglich angeordnet ist, die aus einem Verschlußteil (27) mit konzentrischen, durch radiale Stege (29) miteinander verbundenen Ringen (19) besteht und durch flexible Lenker (26) geführt ist, die mit einem Ende am Außenrand des Verschlußteils (27) angreifen und mit ihrem anderen Ende außerhalb des Verschlußteils (27) relativ zum Ventilsitz fixiert sind, **dadurch gekennzeichnet**, daß die Lenker (26), die zunächst mit einem Außensteg (30) radial einwärts gegen den Außenrand des Verschlußteils (27) der Verschlußlamelle (16) verlaufen, in je einem Bogen (31) in wenigstens einen in Umfangsrichtung verlaufenden Ringabschnitt (32) übergehen, der vor der Angriffsstelle am Verschlußteil (27) zunächst mit einer Kröpfung (33) auswärts und anschließend in einem Bogen (34) radial einwärts mit einem Innensteg (35) zum Außenrand des Verschlußteils (27) geführt ist, dessen radiale Stege (29) gegen die an dem Verschlußteil (27) angreifenden Innenstege (35) der Lenker (26) und auch gegeneinander in Umfangsrichtung versetzt sind, wobei in Öffnungsrichtung des Ventils Raum zum freien Ausschwingen der Verschlußlamelle (16) ohne Endanschlag vorgesehen ist.

2. Ventil nach Anspruch 1, dadurch gekennzeichnet, daß die Krümmungsdurchmesser der Bögen (31, 34), mit denen die Ringabschnitte (32) der Lenker (26) in den Außensteg (30) und in den Innensteg (35) übergehen, größer als die mittlere Breite der Ringabschnitte (32) der Lenker (26) sind.

3. Ventil nach Anspruch 1 oder 2, dadurch gekennzeichnet, daß die Ringabschnitte (32) der Lenker (26) über ihre ganze Länge, insbesondere auch im Bereich der an die Innen- (35) und Außenstege (30) anschließenden Bögen (34, 31), wenigstens annähernd gleich breit sind.

4. Ventil nach einem der Ansprüche 1, 2 oder 3, dadurch gekennzeichnet, daß an die Außenstege (30) der Lenker (26) je zwei Ringabschnitte (32) anschließen, die in entgegengesetzten Umfangsrichtungen verlaufen und von denen jeder mit einem vom benachbarten Außensteg (30) ausgehenden, ihm entgegen verlaufenden Ringabschnitt (32) in einen gemeinsamen Innensteg (35) übergehen.

5. Ventil nach Anspruch 4, dadurch gekennzeichnet, daß die Ringabschnitte (32) aller vorgesehenen Lenker (26) zu einem geschlossenen Ring verbunden sind, der im Bereich der Innenstege (35) von der Kreisform auswärts abweicht.

6. Ventil nach einem der Ansprüche 1 bis 5, dadurch gekennzeichnet, daß die Lenker (26) der Verschlußlamelle (16) von zwei einander diametral gegenüberliegenden Außenstegen (30) ausgehen und mit zwei einander diametral gegenüberliegenden Innenstegen (35) enden, die gegen die Außenstege (30) um 90° in Umfangsrichtung versetzt sind.

7. Kompressor bestehend aus einem Kompressorzylinder (1) mit einem Kolben (2), einem Zylinderkopf (3), einer Sitzplatte (4), einem Druckventil (8) sowie einem Ventil nach einem der Ansprüche 1 bis 6 als Saugventil, wobei die Außenstege (30) der Lenker (26) mit einem geschlossenen Ein spannring (25) verbunden sind, der zwischen der Stirnseite des Kompressorzylinders (1) und dem Zylinderkopf (3) eingespannt ist, wobei die Verschlußlamelle (16) in den Kompressorzylinder (1) frei ausschwingt, der Ventilsitz in der gleichfalls zwischen dem Kompressorzylinder (1) und dem Zylinderkopf (3) eingespannten Sitzplatte (4) vorgesehen und Durchgangskanäle (20) für das Druckventil (8) im Raum zwischen dem Einspannring (25) und dem Verschlußteil (27) der Verschlußlamelle (16) angeordnet sind.

## Claims

1. An automatic valve, in particular a compressor valve or a non-return valve, with a valve seat comprising through ducts (18) for the controlled medium, above which [ducts] a closure plate (7) is arranged so as to be movable, the closure plate (7) comprising a closure part (27) with concentric rings (19) connected to one another by radial webs (29) and being guided by flexible guide arms (26) which at one end engage on the outer edge of the closure part (27) and at the other end are fixed relative to the valve seat outside the closure part (27), **characterized in that** the guide arms (26), which extend initially with an external web (30) radially inwards towards the outer edge of the closure part (27) of the closure plate (16), pass in a respective curve (31) into at least one annular portion (32) which extends in the peripheral direction and which is guided in front of the engagement point on the closure part (27) initially outwards with an angled bend and then in a curve (34) radially inwards with an inner web (35) towards the outer edge of the closure part (27), the radial webs (29) of which are offset with respect to the inner webs (35) of the guide arms (26) engaging on the closure part (27) and also with respect to each other in the peripheral direction, wherein space is provided in the opening direction of the valve for the closure plate (16) to swing out freely without an end stop.

2. A valve according to Claim 1, **characterized in that** the diameters of the curvature of the curves (31, 34), with which the annular portions (32) of the guide arms (26) pass into the outer web (30) and into the inner web (35), are greater than the mean width of the annular portions (32) of the guide arms (26).

3. A valve according to Claim 1 or 2, **characterized in that** the annular portions (32) of the guide arms (26) are at least approximately the same width over their entire length, in particular in the region of the curves (34, 31) adjacent to the inner (35) and outer webs (30).

4. A valve according to one of Claims 1, 2 or *[sic]* 3, **characterized in that** the outer webs (30) of the guide arms (26) have adjacent thereto two respective annular portions (32) which extend in opposite peripheral directions and each of which [passes] - with an annular portion (32) starting from the adjacent outer web (30) and extending opposite thereto - into a common inner web (35).

5. A valve according to Claim 4, **characterized in that** the annular portions (32) of all the guide arms (26) provided are joined to form a closed ring which diverges outwards from the circular shape in the region of the inner webs (35).

6. A valve according to one of Claims 1 to 5, **characterized in that** the guide arms (26) of the closure plate (16) start from two mutually diametrically opposite outer webs (30) and terminate at two mutually diametrically opposite inner webs (35) which are offset at 90° in the peripheral direction with respect to the outer webs (30).

7. A compressor comprising a compressor cylinder (1) with a piston (2), a cylinder head (3), a seating plate (4), a pressure valve (8) and a valve according to one of Claims 1 to 6 as a suction valve, wherein the outer webs (30) of the guide arms (26) are connected to a closed clamping ring (25) which is clamped between the end face of the compressor cylinder (1) and the cylinder head (3), wherein the closure plate (16) swings freely out into the compressor cylinder (1), the valve seating is provided in the seating plate (4) likewise clamped between the compressor cylinder (1) and the cylinder head (3), and through ducts (20) for the pressure valve (8) are arranged in the space between the clamping ring (25) and the closure part (27) of the closure plate (16).

## Revendications

1. Soupape automatique, en particulier soupape de compresseur ou clapet anti-retour, comportant un siège de soupape qui présente des canaux de passage (18) pour le fluide piloté, au-dessus desquels est agencé de façon mobile une lamelle d'obturation (7) constituée par une partie d'obturation (27) présentant des anneaux concentriques (19) reliés les uns aux autres par des barrettes radiales (29) et guidée par des branches flexibles (26) qui attaquent par une extrémité le bord extérieur de la partie d'obturation (27) et qui sont fixées par rapport au siège de soupape par l'autre extrémité à l'extérieur de la partie d'obturation (27), caractérisée en ce que les branches (26) qui s'étendent tout d'abord par une barrette extérieure (30) radialement vers l'intérieur contre le bord extérieur de la partie d'obturation (27) de la lamelle d'obturation (16), se transforment en un arc respectif (31) dans au moins un tronçon annulaire (32) s'étendant en direction périphérique, qui est mené, en avant de l'emplacement d'attaque sur la partie d'obturation (27), tout d'abord avec un coudage (33) dirigé vers l'extérieur et ensuite en arc (34) dirigé radialement vers l'intérieur par une barrette intérieure (35) vers le bord extérieur de la partie d'obturation (27), dont les barrettes radiales (29) sont décalées par rapport aux barrettes intérieures (35) des branches (26), qui attaquent la partie d'obturation (27), et sont également décalées les unes par rapport aux autres en direction périphérique, en prévoyant un espace libre en direction d'ouverture de la soupape pour le débattement libre de la lamelle d'obturation (16) sans butée d'extrémité.

2. Soupape selon la revendication 1, caractérisée en ce que les diamètres de courbure des arcs (31, 34), par lesquels les tronçons annulaires (32) des branches (26) se transforment en la barrette extérieure (30) et en la barrette intérieure (35), sont supérieurs à la largeur moyenne des tronçons annulaires (32) des branches (26).

3. Soupape selon l'une ou l'autre des revendications 1 et 2, caractérisée en ce que les tronçons annulaires (32) des branches (26) présentent une largeur au moins approximativement égale sur toute leur longueur, en particulier également dans la région des arcs (34, 31) qui se raccordent aux barrettes intérieures (35) et extérieures (30).

4. Soupape selon l'une quelconque des revendications 1, 2 et 3, caractérisée en ce qu'aux barrettes extérieures (30) des branches (26) se raccordent respectivement deux tronçons annulaires (32) qui s'étendent dans des directions périphériques opposées et dont chacun se transforme en une barrette intérieure (35) commune, via un tronçon annulaire (32), partant depuis la barrette extérieure voisine (30) et s'étendant en sens opposé à lui-même.

5. Soupape selon la revendication 4, caractérisée en ce que les tronçons annulaires (32) de toutes les branches prévues (26) sont reliés les uns aux autres pour former un anneau fermé qui dévie vers l'extérieur de la forme circulaire dans la région des barrettes intérieures (35).

6. Soupape selon l'une quelconque des revendications 1 à 5, caractérisée en ce que les branches (26) de la lamelle d'obturation (16) partent depuis deux barrettes extérieures (30) situées diamétralement en vis-à-vis l'une de l'autre et se terminent en deux barrettes intérieures (35) situées diamétralement en vis-à-vis l'une de l'autre, qui sont décalées de 90° par rapport aux barrettes (30) en direction périphérique.

7. Compresseur constitué par un cylindre compresseur (1) présentant un piston (2), une tête de cylindre (3), une plaque-siège (4), une soupape de compression (8) ainsi qu'une soupape selon l'une quelconque des revendications 1 à 6, réalisée sous forme de soupape d'aspiration, dans lequel les barrettes extérieures (30) des branches (26) sont reliées à un anneau de serrage fermé (25) serré entre la face frontale du cylindre compresseur (1) et la tête de cylindre (3), la lamelle d'obturation (16) se débattant librement dans le cylindre compresseur (1), le siège de soupape étant prévu dans la plaque-siège (4) serrée également entre le cylindre compresseur (1) et la tête de cylindre (3), et des canaux de passage (20) pour la soupape de compression (8) étant agencés dans l'espace entre l'anneau de serrage (25) et la partie d'obturation (27) de la lamelle d'obturation (16).
